(19) Europäisches Patentamt
European Patent Office
Office européen des brevets

(11) EP 4 718 147 A1

(12) EUROPEAN PATENT APPLICATION
published in accordance with Art. 153(4) EPC

(43) Date of publication:
01.04.2026 Bulletin 2026/14

(51) International Patent Classification (IPC):
G02B 27/28 (2006.01)

(21) Application number: 25747503.8

(22) Date of filing: 13.01.2025

(52) Cooperative Patent Classification (CPC):
B60K 35/23; G02B 26/06; G02B 27/01; G02B 27/28

(86) International application number:
PCT/CN2025/072037

(87) International publication number:
WO 2025/161927 (07.08.2025 Gazette 2025/32)

(84) Designated Contracting States:
AL AT BE BG CH CY CZ DE DK EE ES FI FR GB GR HR HU IE IS IT LI LT LU LV MC ME MK MT NL NO PL PT RO RS SE SI SK SM TR
Designated Extension States:
BA
Designated Validation States:
GE KH MA MD TN

(30) Priority: 31.01.2024 CN 202410142610

(71) Applicant: Shenzhen Yinwang Intelligent Technologies Co., Ltd.
Shenzhen, Guangdong 518110 (CN)

(72) Inventor: ZHAO, Fei
Shenzhen, Guangdong 518129 (CN)

(74) Representative: MERH-IP Matias Erny Reichl Hoffmann
Patentanwälte PartG mbB
Paul-Heyse-Straße 29
80336 München (DE)

(54) **PICTURE GENERATION APPARATUS, DISPLAY DEVICE, AND VEHICLE**

(57) Embodiments of this application provide a picture generation apparatus, a display device, and a transportation means, and relate to the field of projection device technologies, to resolve a problem that display quality is greatly affected by a temperature change. The picture generation apparatus includes a light source module, a light modulator, a projection module, and a phase compensation apparatus. The light source module is configured to generate first polarized light projected to the light modulator. The light modulator includes a liquid crystal layer, and the liquid crystal layer is used to modulate a polarization state of the first polarized light to form a modulated beam. The projection module is configured to project second polarized light in the modulated beam. Polarization directions of the first polarized light and the second polarized light are perpendicular to each other. The phase compensation apparatus is disposed between the light source module and the projection module, and includes a phase compensation plate and a drive apparatus. The drive apparatus is configured to drive the phase compensation plate to move. In a moving process, a phase delay amount of the phase compensation plate in an optical path between the light source module and the projection module is changed. The picture generation apparatus may be used in a display device and a transportation means.

FIG. 1

## Description

This application claims priority to Chinese Patent Application No. 202410142610.9, filed with the China National Intellectual Property Administration on January 31, 2024 and entitled "PICTURE GENERATION APPARATUS, DISPLAY DEVICE, AND TRANSPORTATION MEANS", which is incorporated herein by reference in its entirety.

## TECHNICAL FIELD

This application relates to the field of projection device technologies, and in particular, to a picture generation apparatus, a display device, and a transportation means.

## BACKGROUND

A picture generation apparatus (Picture Generation Unit, PGU), commonly known as a "light engine", is a device that can generate, based on an input electrical signal, imaging light including image information, and is an important part of projection products such as a head-up display (Head-Up Display, HUD) apparatus, a projector, and a near-eye display (Near-Eye Display, NED) device.

The picture generation apparatus mainly includes elements such as a light source, a light modulator, and a projection lens. During working, the light source is configured to generate a light source beam projected to the light modulator, the light modulator is configured to modulate the light source beam under control to obtain the imaging light, and the imaging light is projected by the projection lens. A liquid crystal display (liquid crystal display, LCD) and a liquid crystal on silicon (liquid crystal on silicon, LCoS) are two common light modulators, and both include a liquid crystal layer. A polarization state of the light source beam is modulated through electronically controlled birefringence effect in the liquid crystal layer.

However, a material characteristic of the liquid crystal layer is greatly affected by a temperature, and display quality of the picture generation apparatus is affected in a temperature change process.

## SUMMARY

Embodiments of this application provide a picture generation apparatus, a display device, and a transportation means, to resolve a problem that display quality of the picture generation apparatus is greatly affected by a temperature change.

To achieve the foregoing objectives, the following technical solutions are used in embodiments of this application.

According to a first aspect, an embodiment of this application provides a picture generation apparatus. The picture generation apparatus includes a light source module, a light modulator, a projection module, and a phase compensation apparatus. The light source module is configured to generate first polarized light projected to the light modulator. The light modulator is configured to modulate the first polarized light into a modulated beam. The projection module is configured to project second polarized light in the modulated beam. The first polarized light and the second polarized light are linearly polarized light whose polarization directions are perpendicular to each other.

The phase compensation apparatus is disposed between the light source module and the projection module, and includes a phase compensation plate and a drive apparatus. The drive apparatus is configured to drive the phase compensation plate to move. The phase compensation plate has at least two compensation states under driving by the drive apparatus. In the different compensation states, phase delay amounts of the phase compensation plate in an optical path between the light source module and the projection module are different.

The phase compensation apparatus is disposed in the picture generation apparatus provided in this embodiment of this application. The drive apparatus in the phase compensation apparatus drives the phase compensation plate to move, which can change the compensation state of the phase compensation plate, that is, change the phase delay amount of the phase compensation plate in the optical path. This compensates for different phase-difference deviations caused by the light modulator due to impact of factors such as a temperature, and therefore helps improve display quality of the picture generation apparatus and resolve a problem that the display quality is affected by factors such as a temperature.

In some embodiments, the phase compensation plate includes at least two compensation portions with different phase delay amounts. The drive apparatus drives the phase compensation plate to move, to enable any compensation portion to be located in the optical path between the light source module and the projection module.

In the picture generation apparatus provided in this embodiment of this application, the phase compensation apparatus changes the compensation state by switching between different compensation portions, that is, changes the phase delay amount of the phase compensation plate in the optical path. This solution has advantages such as a simple structure, low control difficulty, and low requirements on the drive apparatus and the phase compensation plate.

In some embodiments, the compensation portions in the phase compensation plate are arranged around a first axis, and the drive apparatus is a rotation drive apparatus that drives the phase compensation plate to rotate around the first axis. The first axis is parallel to a light propagation direction of a position at which the phase compensation plate is located.

In the picture generation apparatus provided in this embodiment of this application, the phase compensation apparatus switches between different compensation portions by driving the phase compensation plate to rotate around an axis, to change the phase delay amount of the phase compensation plate in the optical path. This solution has advantages such as a simple structure, low control difficulty, and high reliability and control accuracy.

In some embodiments, the compensation portions in the phase compensation plate are arranged along a first straight line, and the drive apparatus is a linear drive apparatus that drives the phase compensation plate to move along the first straight line. The first straight line is perpendicular to a light propagation direction of a position at which the phase compensation plate is located.

In the picture generation apparatus provided in this embodiment of this application, the phase compensation apparatus switches between different compensation portions by driving the phase compensation plate to translate, to change the phase delay amount of the phase compensation plate in the optical path. This solution has advantages such as a simple structure, low control difficulty, and high reliability and control accuracy.

In some embodiments, the phase compensation plate is of a plate-shaped structure whose thickness direction is parallel to a second straight line, and the drive apparatus is a rotation drive apparatus that drives the phase compensation plate to rotate around a second axis. The second axis is perpendicular to a light propagation direction of a position at which the phase compensation plate is located, and is perpendicular to the second straight line, and the second axis passes through the phase compensation plate.

In the picture generation apparatus provided in this embodiment of this application, the phase compensation apparatus changes, by driving the phase compensation plate to rotate around an axis, a distance that light passes through the phase compensation plate, to change the phase delay amount, that is, change the compensation state of the phase compensation plate. This solution has advantages such as a simple structure, low control difficulty, and low requirements on the drive apparatus and the phase compensation plate.

In some embodiments, the drive apparatus includes a drive motor or a piezoelectric device. In the picture generation apparatus provided in this embodiment of this application, the drive apparatus of the phase compensation apparatus may use different apparatuses to provide power, and has advantages such as good adaptability and an ability to adapt to different scenarios.

In some embodiments, the picture generation apparatus further includes a compensation controller. The compensation controller is electrically connected to the drive apparatus and is configured to control, based on an external input signal and/or an automatic control signal, the drive apparatus to move. In the picture generation apparatus provided in this embodiment of this application, the phase compensation apparatus may perform control based on the external input signal and/or the automatic control signal, and control manners are diversified and flexible.

In some embodiments, the picture generation apparatus further includes a detection sensor. The detection sensor is configured to detect environment information of the picture generation apparatus, and the compensation controller is configured to control, based on the environment information, the drive apparatus to move. In this design, targeted compensation may be performed, based on the information about the environment in which the picture generation apparatus is located, on the phase-difference deviation caused due to a change of an environment factor. This helps improve compensation accuracy, further helps improve display quality, and resolves the problem that the display quality is affected by the environment change.

In some embodiments, the environment information of the picture generation apparatus includes at least one of the following: a temperature or humidity. The environment information may further include other types of information. Examples are not described herein one by one. In this design, targeted compensation may be performed, based on a temperature change and or a humidity change of the environment in which the picture generation apparatus is located, on the phase-difference deviation caused due to the impact of the temperature change and/or the humidity change. This helps improve compensation accuracy, further helps improve display quality, and resolves the problem that the display quality is affected by the temperature change and/or the humidity change.

In some embodiments, the picture generation apparatus further includes a display controller. The display controller is electrically connected to the light modulator, and is configured to control the light modulator. The detection sensor is electrically connected to the display controller. The compensation controller is electrically connected to the display controller, and is integrated into the display controller. In this design, a control apparatus can be simplified, and integration of the control apparatus can be improved.

In some embodiments, the light modulator is a liquid crystal on silicon, and the projection module includes a polarizing beam splitter and a projection lens. The polarizing beam splitter includes a first optical path and a second optical path that are formed through polarizing beam splitting. The first optical path is configured to transmit the first polarized light, and the second optical path is configured to transmit the second polarized light. The light source module and the liquid crystal on silicon are respectively disposed opposite to two ends of the first optical path.

The projection lens and the liquid crystal on silicon are respectively disposed opposite to two ends of the second optical path. The polarizing beam splitter is configured to: obtain the second polarized light from a modulated beam emitted by the liquid crystal on silicon, and project the second polarized light to the projection lens through the second optical path.

The picture generation apparatus provided in this embodiment of this application may be a picture generation apparatus using the liquid crystal on silicon. The phase compensation apparatus can compensate for a phase-difference deviation caused by the liquid crystal on silicon, which improves display quality.

In some embodiments, the light source module includes a polarized light source. The polarized light source is configured to generate the first polarized light projected to the polarizing beam splitter.

Alternatively, the light source module includes an un-polarized light source and a polarizer. The un-polarized light source is configured to generate a light source beam projected to the polarizer, and the light source beam is un-polarized light. The polarizer is configured to: obtain the first polarized light from the light source beam, and project the first polarized light to the polarizing beam splitter.

In the picture generation apparatus provided in this embodiment of this application, the light source module may be an integrated light source, or may be a combined light source, has good adaptability, and may be used in different application scenarios.

In some embodiments, the picture generation apparatus further includes a first polarizing filter disposed between the light source module and the polarizing beam splitter, and/or a second polarizing filter disposed between the polarizing beam splitter and the projection lens. A transmission axis direction of the first polarizing filter is the same as the polarization direction of the first polarized light, and a transmission axis direction of the second polarizing filter is the same as the polarization direction of the second polarized light.

This design can improve a display contrast, and further helps improve display quality.

In some embodiments, the light modulator is a liquid crystal on silicon, the light source module includes a polarizing beam splitter and an un-polarized light source, and the projection module includes the polarizing beam splitter and a projection lens. The polarizing beam splitter includes a first optical path and a second optical path that are formed through polarizing beam splitting. The first optical path is configured to transmit the first polarized light, and the second optical path is configured to transmit the second polarized light.

The un-polarized light source and the liquid crystal on silicon are respectively disposed opposite to two ends of the first optical path. The un-polarized light source is configured to generate a light source beam projected to the polarizing beam splitter, the light source beam is un-polarized light. The polarizing beam splitter is configured to: obtain the first polarized light from a light source beam emitted by the liquid crystal on silicon, and project the first polarized light to the liquid crystal on silicon through the first optical path.

The projection lens and the liquid crystal on silicon are respectively disposed opposite to two ends of the second optical path. The polarizing beam splitter is configured to: obtain the second polarized light from a modulated beam emitted by the liquid crystal on silicon, and project the second polarized light to the projection lens through the second optical path. The phase compensation apparatus is disposed between the polarizing beam splitter and the liquid crystal on silicon.

The picture generation apparatus provided in this embodiment of this application may be a picture generation apparatus using the liquid crystal on silicon. The phase compensation apparatus can compensate for a phase-difference deviation caused by the liquid crystal on silicon, which improves display quality. In addition, the light source module may use the un-polarized light source, and obtain the first polarized light by using a function of polarizing of the polarizing beam splitter. This design helps simplify a structure of the optical path and reduce costs.

In some embodiments, the polarizing beam splitter is a plate-type or prism-type polarizing beam splitting device. In the picture generation apparatus provided in this embodiment of this application, the polarizing beam splitter may be of a plate-type structure, or may be a prism-type structure, has good adaptability, and may be used in different application scenarios.

In some embodiments, the light modulator is a liquid crystal display apparatus, and the light source module and the projection module are respectively disposed on two sides of the liquid crystal display apparatus. The projection module includes an analyzer and a projection lens. The analyzer is configured to: obtain the second polarized light from a modulated beam emitted by the liquid crystal display apparatus, and project the second polarized light to the projection lens. The phase compensation apparatus is disposed between the light source module and the liquid crystal display apparatus, and/or between the projection module and the liquid crystal display apparatus.

The picture generation apparatus provided in this embodiment of this application may be a picture generation apparatus using the liquid crystal display apparatus. The phase compensation apparatus can compensate for a phase-difference deviation caused by the liquid crystal display apparatus, which improves display quality.

In some embodiments, the light source module includes a polarized light source. The polarized light source is configured to generate the first polarized light projected to the polarizing beam splitter.

Alternatively, the light source module includes an un-polarized light source and a polarizer. The un-polarized light source is configured to generate a light source beam projected to the polarizer, and the light source beam is un-polarized light. The polarizer is configured to: obtain the first polarized light from the light source beam, and project the first polarized light to the liquid crystal display apparatus.

In the picture generation apparatus provided in this embodiment of this application, the light source module may be an integrated light source, or may be a combined light source, has good adaptability, and may be used in different application scenarios.

According to a second aspect, an embodiment of this application also provides a display device. The display device includes a processor and the picture generation apparatus according to any one of the embodiments of the first aspect. The processor is configured to control the picture generation apparatus to form imaging light.

According to a third aspect, an embodiment of this application also provides a transportation means. The transportation means includes the display device in the embodiment of the second aspect, and the display device is mounted in the transportation means.

In some embodiments, the transportation means further includes a reflection element. The display device is configured to project imaging light to the reflection element, and the reflection element is configured to reflect the imaging light.

Technical effects that can be achieved by the display device and the transportation means provided in embodiments of this application are the same as technical effects that can be achieved by the picture generation apparatus in any one of the foregoing embodiments. Details are not described herein again.

## BRIEF DESCRIPTION OF DRAWINGS

FIG. 1 is a diagram of a structure of a picture generation apparatus according to an embodiment of this application;
FIG. 2 is an example diagram of a structure and a principle of a polarizing beam splitter in FIG. 1;
FIG. 3 is a main view of a liquid crystal on silicon according to an embodiment of this application;
FIG. 4 is a sectional view of the liquid crystal on silicon in FIG. 3;
FIG. 5 is a diagram of a principle of a phase compensation apparatus according to an embodiment of this application;
FIG. 6 is a diagram of a structure of a phase compensation apparatus according to an embodiment of this application;
FIG. 7 is a diagram of a structure of a phase compensation plate in another phase compensation apparatus according to an embodiment of this application;
FIG. 8 is a diagram of a structure of still another phase compensation apparatus according to an embodiment of this application;
FIG. 9 is a diagram of a principle of controlling a phase compensation apparatus by a picture generation apparatus according to an embodiment of this application;
FIG. 10 is a diagram of a structure of another picture generation apparatus according to an embodiment of this application;
FIG. 11 is a diagram of a structure of another picture generation apparatus according to an embodiment of this application;
FIG. 12 is a diagram of a structure of another picture generation apparatus according to an embodiment of this application;
FIG. 13 is a diagram of a structure of still another picture generation apparatus according to an embodiment of this application;
FIG. 14A to FIG. 14D are diagrams of different application scenarios of a picture generation apparatus according to an embodiment of this application;
FIG. 15 is a diagram of a structure of a display device according to an embodiment of this application;
FIG. 16 is a diagram of a circuit of a display device according to an embodiment of this application;
FIG. 17 is a diagram of a structure of a transportation means according to an embodiment of this application; and
FIG. 18 is a diagram of a function of a transportation means according to an embodiment of this application.

## DESCRIPTION OF EMBODIMENTS

The following describes the technical solutions in embodiments of this application with reference to the accompanying drawings in embodiments of this application. It is clear that the described embodiments are merely some but not all of embodiments of this application.

Terms such as "first" and "second" mentioned below in embodiments of this application are merely used for ease of description, and shall not be understood as an indication or implication of relative importance or implicit indication of a quantity of indicated technical features. Therefore, a feature limited by "first", "second", or the like may explicitly or implicitly include one or more features. In the descriptions of this application, unless otherwise stated, "a plurality of" means two or more than two.

In embodiments of this application, "up", "down", "left", and "right" are not limited to orientations of schematically placed components in relative accompanying drawings. It should be understood that these orientation terms may be relative concepts. The orientation terms are used for relative description and clarification, and may vary correspondingly based on a change in an orientation in which the component is placed in the accompanying drawings.

In embodiments of this application, unless otherwise specified in the context, in the entire specification and claims, the term "include" is interpreted as "open and inclusive", that is, "include, but not limited to". In the description of this specification, terms such as "an embodiment", "some embodiments", "example embodiments", "examples", or "some examples" are intended to indicate that specific features, structures, materials, or features related to the embodiments or examples are included in at least one embodiment or example of this application. The foregoing schematic representations of the terms do not necessarily refer to a same embodiment or example. Further, the particular feature, structure, material, or characteristic may be included in any one or more embodiments or examples in any appropriate manner.

As used in this specification, "about", "general", or "approximate" includes the stated values and the average values within an acceptable deviation range of a particular value, where the acceptable deviation range is determined by a person of ordinary skill in the art by considering an error (namely, a limitation of a measurement system) related to measurement being discussed and measurement of a specific quantity.

As used in this specification, "parallel", "perpendicular to", and "equal to" include described cases and similar cases. A range of a similar case is in an acceptable deviation range. The acceptable deviation range is determined by a person of ordinary skill in the art by considering an error (namely, a limitation of a measurement system) related to measurement being discussed and measurement of a specific quantity. For example, "parallel" includes "absolutely parallel" and "approximately parallel", and an acceptable deviation range of "approximately parallel" may be, for example, a deviation within 5°. "Perpendicular to" includes "absolutely perpendicular to" and "approximately perpendicular to", and an acceptable deviation range of "approximately perpendicular to" may also be, for example, a deviation within 5°. "Equal to" includes "absolutely equal to" and "approximately equal to", and an acceptable deviation range of "approximately equal to" may be that, for example, a difference between two equal objects is less than or equal to 5% of either of the two objects.

It should be understood that, when a layer or an element is referred to as on another layer or substrate, the layer or element may be directly on the another layer or substrate, or an intermediate layer may exist between the layer or element and the another layer or substrate.

In embodiments of this application, an example implementation is described with reference to a sectional view and/or a plane diagram and/or an equivalent circuit diagram that are/is used as idealized example accompanying drawings. In the accompanying drawings, for clarity, thicknesses of layers and regions are enlarged. Thus, a change in a shape in the accompanying drawings due to, for example, manufacturing techniques and/or tolerances may be envisaged. Therefore, example implementations should not be construed as being limited to a shape of a region shown in this specification, but rather include shape deviations due to, for example, manufacturing. For example, an etching region shown as a rectangle typically has a bending characteristic. Therefore, the regions shown in the accompanying drawings are essentially examples, and their shapes are not intended to show actual shapes of regions of a device, and are not intended to limit a scope of the example implementations.

An embodiment of this application provides a picture generation apparatus. The picture generation apparatus includes a light modulator. The light modulator may be a liquid crystal on silicon (liquid crystal on silicon, LCoS for short) and a liquid crystal display apparatus (liquid crystal display, LCD for short). This specification first describes the solution by using an example in which the liquid crystal on silicon is used as the light modulator in the picture generation apparatus.

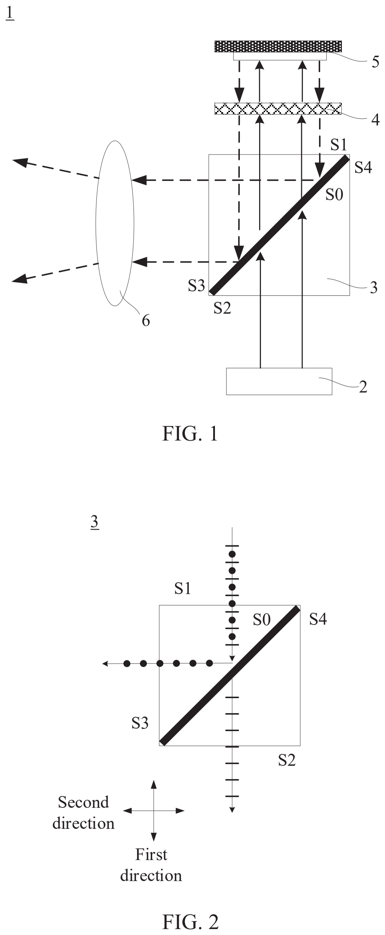

As shown in FIG. 1, the picture generation apparatus 1 includes a light source module 2, a polarizing beam splitter 3, a liquid crystal on silicon 5, a projection lens 6, and a phase compensation apparatus 4. The light source module 2 is configured to generate first polarized light projected to the polarizing beam splitter 3. The first polarized light is linearly polarized light, and may be S-polarized light or P-polarized light. A polarization direction of the first polarized light may be determined based on designs of optical paths of the polarizing beam splitter 3 and the liquid crystal on silicon 5 (herein, reference may be made to related descriptions of the polarizing beam splitter 3 and the liquid crystal on silicon 5 below).

The light source module 2 may be an integrated polarized light source that can directly emit the first polarized light, and the first polarized light emitted from the light source module 2 is irradiated on the polarizing beam splitter 3. In some other embodiments, the light source module 2 may be a combination of an un-polarized light source and a polarizer. To be specific, the un-polarized light source is configured to generate a light source beam irradiated on the polarizer, and the light source beam is natural light, that is, un-polarized light. The polarizer is a polarizing filter that allows only linearly polarized light whose polarization direction is parallel to its transmission axis direction to pass through. When the light source beam passes through the polarizer, the first polarized light may be obtained from the light source beam, and the first polarized light obtained by using the polarizer is irradiated on the polarizing beam splitter 3.

The polarizing beam splitter 3 is an optical device that splits an incident beam based on a polarization direction, and may separately transmit, to different positions, the S-polarized light and P-polarized light that are incident at a same position. It can be learned from this that the polarizing beam splitter 3 has functions of polarizing and analyzing. The polarizing beam splitter 3 may be a prism-type or plate-type polarizing beam splitting device.

A prism-type polarizing beam splitter 3 is used as an example. As shown in FIG. 2, the polarizing beam splitter 3 is a square prism including a combination of two right-angle prisms. An outer surface of the polarizing beam splitter 3 includes four end faces: a first end face S1, a second end face S2, a third end face S3, and a fourth end face S4. The first end face S1 and the second end face S2 are disposed opposite to each other in a first direction, and both are perpendicular to the first direction. The third end face S3 and the fourth end face S4 are disposed opposite to each other in a second direction, and both are perpendicular to the second direction. The second direction and the first direction may be perpendicular to each other.

The polarizing beam splitter 3 further has a beam splitting surface S0 located inside. The beam splitting surface S0 is disposed obliquely relative to both the first direction and the second direction. The first end face S1 and the second end face S2 are located on two sides of the beam splitting surface S0, the first end face S1 and the third end face S3 are located on a same side of the beam splitting surface S0, and the fourth end face S4 and the second end face S2 are located on the other side of the beam splitting surface S0. A polarization beam splitting film is disposed on the beam splitting surface S0, and the polarization beam splitting film may reflect the S-polarized light and transmit the P-polarized light. When an incident beam including the S-polarized light (represented by a dot symbol in FIG. 2) and the P-polarized light (represented by a vertical short line symbol in FIG. 2) is irradiated on the beam splitting surface S0 through the first end face S1, the S-polarized light reflected by the polarization beam splitting film on the beam splitting surface S0 is emitted from the third end face S3, and the P-polarized light transmitted by the polarization beam splitting film on the beam splitting surface S0 is emitted from the second end face S2. This implements a function of polarizing beam splitting.

It can be learned from this that the polarizing beam splitter 3 includes a transmission optical path that can transmit the P-polarized light, and the first end face S1, the beam splitting surface S0, and the second end face S2 are all located in the transmission optical path. The polarizing beam splitter 3 further includes a reflection optical path that can reflect the S-polarized light, and the first end face S1, the beam splitting surface S0, and the third end face S3 are all located in the reflection optical path. It can be learned from the foregoing description that the first polarized light may be the S-polarized light, or may be the P-polarized light, and the first polarized light generated by the light source module 2 needs to be transmitted to the liquid crystal on silicon 5 by using the polarizing beam splitter 3. Therefore, the transmission optical path or the reflection optical path in the polarizing beam splitter 3 may be selected based on the polarization direction of the first polarized light for transmission. For example, when the first polarized light is the P-polarized light, the transmission optical path in the polarizing beam splitter 3 may be selected for transmission; and when the first polarized light is the S-polarized light, the reflection optical path in the polarizing beam splitter 3 may be selected for transmission.

For ease of description, in this specification, an optical path that is in the polarizing beam splitter 3 and that is used to transmit the first polarized light is defined as a first optical path. The first optical path may be the reflection optical path or the transmission optical path. The other one of the reflection optical path and the transmission optical path is defined as a second optical path. The second optical path is used to transmit second polarized light. The second polarized light is linearly polarized light whose polarization direction is perpendicular to the polarization direction of the first polarized light. In the picture generation apparatus 1 provided in this embodiment of this application, the light source module 2 and the liquid crystal on silicon 5 are respectively disposed opposite to two ends of the first optical path in the polarizing beam splitter 3. The first polarized light generated by the light source module 2 may be irradiated on the liquid crystal on silicon 5 through the first optical path. The first polarized light emitted from the liquid crystal on silicon 5 may also be irradiated, through the first optical path, on a position at which the light source module 2 is located.

In this embodiment, the first polarized light is the P-polarized light, and the first optical path is the transmission optical path in the polarizing beam splitter 3. The light source module 2 is disposed opposite to the second end face S2 of the polarizing beam splitter 3, and the liquid crystal on silicon 5 is disposed opposite to the first end face S1 of the polarizing beam splitter 3.

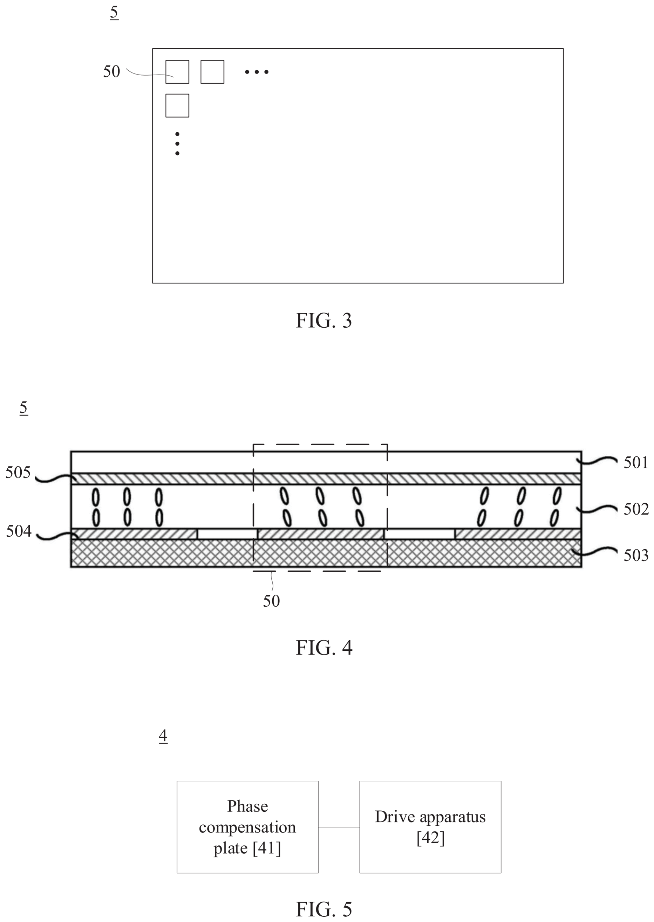

The liquid crystal on silicon 5, also referred to as a liquid crystal silicon, is a reflective display. FIG. 3 is a main view of the liquid crystal on silicon 5 according to an embodiment of this application. As shown in FIG. 3, the liquid crystal on silicon 5 includes a pixel array. The pixel array includes a plurality of pixels (Pixel) 50 arranged in a multi-row and multi-column array. An orientation shown in FIG. 3 is used as an example. A row direction of the array with the pixels 50 is a horizontal direction in FIG. 3, and a column direction is a vertical direction in FIG. 3.

FIG. 4 is a sectional view of the liquid crystal on silicon 5 in FIG. 3. As shown in FIG. 4, the liquid crystal on silicon 5 includes a CMOS (Complementary Metal-Oxide-Semiconductor, complementary-metal-oxide semiconductor) substrate 503, a liquid crystal layer 502, and a transparent substrate 501. The CMOS substrate 503 and the transparent substrate 501 are disposed opposite to each other. The liquid crystal layer 502 is disposed between the CMOS substrate 503 and the transparent substrate 501. Liquid crystal molecules in the liquid crystal layer 502 are anisotropic uniaxial crystals, and have a birefringence function.

The CMOS substrate 503 includes a pixel circuit and a metal reflection mirror. The pixel circuit is fabricated on a silicon wafer by using a CMOS process. After the pixel circuit is fabricated, the silicon wafer is flattened by using a grinding technology and coated with a metal layer that serves as the metal reflection mirror. The metal reflection mirror is usually made of metal aluminum and is used to reflect the incident beam. The pixel circuit in the CMOS substrate 503 includes a pixel driving circuit that is disposed corresponding to the pixels 50, and the pixel driving circuit includes a first electrode 504. A second electrode 505 is disposed on a side that is of the transparent substrate 501 and that is close to the CMOS substrate 503. When different voltages are respectively applied to the first electrode 504 and the second electrode 505, an electric field with a specific voltage difference may be generated between the first electrode 504 and the second electrode 505. Under an action of the electric field, the liquid crystal molecules located between the first electrode 504 and the second electrode 505 in the liquid crystal layer 502 deflect. This changes an optical axis direction of the liquid crystal layer 502 located between the first electrode 504 and the second electrode 505. Applying different electric fields between the first electrode 504 and the second electrode 505 can obtain different optical axis directions of the liquid crystal layer 502, and there are correspondences between the electric fields and the optical axis directions.

When a beam of polarized light is incident to the liquid crystal layer 502, the optical axis direction of the liquid crystal layer 502 is controlled, through the electric field, to be not parallel to a propagation direction of the incident polarized light. That is, an included angle $\theta$ between the propagation direction of the incident polarized light and the optical axis direction of the liquid crystal layer 502 is not equal to 0 degrees. The incident polarized light may be split into an ordinary ray (Ordinary Ray, o ray for short) whose polarization direction is perpendicular to the optical axis direction, and an extraordinary ray (Extraordinary Ray, e ray for short) whose polarization direction is parallel to the optical axis direction. A refractive index of the o ray in the liquid crystal layer 502 is $n_\perp$, a refractive index of the e ray in the liquid crystal layer 502 is $n_\parallel$, and $n_\perp$ and $n_\parallel$ are not equal. That is, the o ray and the e ray have different refraction degrees and different propagation speeds in the liquid crystal layer 502. This phenomenon is referred to as birefringence. In this case, a birefringence $\Delta n$ of the liquid crystal layer 502 (for the incident polarized light) is $n_\parallel - n_\perp$.

It can be learned from a refractive index distribution feature of the uniaxial crystal that the birefringence $\Delta n$ of the liquid crystal layer 502 is related to the included angle $\theta$ between the incident polarized light and the optical axis direction, and the optical axis direction of the liquid crystal layer 502 may be controlled by applying an electric field between the first electrode 504 and the second electrode 505. Therefore, the birefringence $\Delta n$ of the liquid crystal layer 502 may be changed by controlling the electric field applied between the first electrode 504 and the second electrode 505.

In addition, when a beam of polarized light is incident to the liquid crystal layer 502, the optical axis direction of the liquid crystal layer 502 is controlled, through the electric field, to be parallel to a propagation direction of the incident polarized light. That is, an included angle $\theta$ between the propagation direction of the incident polarized light and the optical axis direction of the liquid crystal layer 502 is 0 degrees. The incident polarized light may be split into an o ray whose polarization direction is perpendicular to the optical axis direction, and an e ray whose polarization direction is parallel to the optical axis direction. A refractive index of the o ray in the liquid crystal layer 502 is $n_\perp$, a refractive index of the e ray in the liquid crystal layer 502 is $n_\parallel$, and $n_\parallel$ and $n_\perp$ are equal. That is, the o ray and the e ray have same refraction degrees and same propagation speeds in the liquid crystal layer 502. In this case, birefringence does not occur, and a birefringence $\Delta n$ of the liquid crystal layer 502 (for the incident polarized light) is 0.

The electro-optic effect in which a birefringence property of the liquid crystal layer 502 is controlled through the electric field is referred to as electronically controlled birefringence (Electrically Controlled Birefringence, ECB for short) effect.

With reference to FIG. 1 and FIG. 4, when the picture generation apparatus 1 works, the first polarized light emitted from the polarizing beam splitter 3 is incident from a side that is of the liquid crystal on silicon 5 and that is away from the CMOS substrate 503, passes through the transparent substrate 501 and the liquid crystal layer 502, and then reaches the metal reflection mirror. After the first polarized light is reflected at the metal reflection mirror, the first polarized light passes through the liquid crystal layer 502 and the transparent substrate 501 again, and is emitted from the side that is of the liquid crystal on silicon 5 and that is away from the CMOS substrate 503, and then is irradiated on the polarizing beam splitter 3. In the foregoing propagation process of the first polarized light, due to the birefringence function of the liquid crystal layer 502, a specific phase difference (phase delay amount) $\delta$ can be generated between the o ray and the e ray that are split from the first polarized light. The phase difference $\delta$ may be calculated by using the following formula:

$$\delta = \frac{2\pi}{\lambda} \Delta n d$$

In the foregoing formula, $\lambda$ represents a wavelength of the first polarized light, $\Delta n$ represents the birefringence of the liquid crystal layer 502, and $d$ represents a geometric distance at which the first polarized light propagates in the liquid crystal layer 502. It can be learned from the foregoing formula that a value of the phase difference $\delta$ is related to the birefringence $\Delta n$ of the liquid crystal layer 502. However, it can be learned from the foregoing description that the birefringence $\Delta n$ of the liquid crystal layer 502 may be controlled by applying an electric field between the first electrode 504 and the second electrode 505. This can control the phase difference $\delta$. In addition, because the phase difference $\delta$

between the o ray and the e ray affects a polarization state of the first polarized light, the polarization state of the first polarized light may be changed by applying an electric field between the first electrode 504 and the second electrode 505.

The liquid crystal on silicon 5 modulates the polarization state of the first polarized light to form a modulated beam. The modulated beam may be the first polarized light, the second polarized light, elliptically polarized light, or circularly polarized light. The modulated beam emitted from the liquid crystal on silicon 5 is irradiated on the polarizing beam splitter 3, and the liquid crystal on silicon 5 and the projection lens 6 are respectively disposed opposite to two ends of the second optical path in the polarizing beam splitter 3.

When the modulated beam is the first polarized light, as described above, the first polarized light is transmitted in the first optical path in the polarizing beam splitter 3, and cannot be irradiated on the projection lens 6. When the modulated beam is the second polarized light, the second polarized light is transmitted in the second optical path in the polarizing beam splitter 3, and then is irradiated on the projection lens 6. When the modulated beam is the elliptically polarized light or the circularly polarized light, the polarizing beam splitter 3 may split the modulated beam into a part of the first polarized light and a part of the second polarized light through a function of polarizing beam splitting. The first polarized light after splitting is transmitted in the first optical path and cannot be irradiated on the projection lens 6. The second polarized light after splitting may be irradiated on the projection lens 6 through the second optical path. In this way, a function of obtaining the second polarized light from the modulated beam and irradiating the second polarized light on the projection lens 6 by using the second optical path is implemented.

The projection lens 6 may be a short-focus lens, or may be a long-focus lens, and is configured to project the second polarized light to a preset position, for example, a position of a diffusion screen or a reflection element, to implement a display function of the picture generation apparatus 1. In this embodiment, a combination of the projection lens 6 and the polarizing beam splitter 3 can implement a function of projecting the second polarized light in the modulated beam, and the projection lens 6 and the polarizing beam splitter 3 are collectively referred to as a projection module in this specification.

In this embodiment, as shown in FIG. 1, the first polarized light is the P-polarized light, and is transmitted in the transmission optical path in the polarizing beam splitter 3. The second polarized light is the S-polarized light, and is transmitted in the reflection optical path in the polarizing beam splitter 3. The liquid crystal on silicon 5 is disposed opposite to the first end face S1 in the polarizing beam splitter 3, and the projection lens 6 is disposed opposite to the third end face S3 in the polarizing beam splitter 3.

In a display process of the picture generation apparatus 1, display brightness of the picture generation apparatus 1 may be controlled by controlling the liquid crystal on silicon 5 to modulate the polarization state of the first polarized light.

Specifically, when all the first polarized light is converted into the second polarized light, the picture generation apparatus 1 may implement bright state display. In this case, the display brightness is maximum brightness. When the polarization state of the first polarized light does not change, the picture generation apparatus 1 may implement dark state display. In this case, the display brightness is minimum brightness. When the first polarized light is converted into the elliptically polarized light or the circularly polarized light, the display brightness of the picture generation apparatus 1 is between the maximum brightness and the minimum brightness. In addition, a proportion of the first polarized light split from and that of the second polarized light split from the elliptically polarized light or the circularly polarized light may be further controlled, to adjust the display brightness between the maximum brightness and the minimum brightness. A smaller proportion of the second polarized light obtained after the elliptically polarized light or the circularly polarized light is split indicates lower display brightness, and a larger proportion indicates higher display brightness. A ratio of the maximum brightness to the minimum brightness that can be displayed by the picture generation apparatus 1 is display contrast, and is one of important parameters for measuring display quality.

Based on the foregoing description of a structure and a working principle of the liquid crystal on silicon 5, it can be learned that the liquid crystal on silicon 5 controls the birefringence of the liquid crystal layer 502 through the electronically controlled birefringence effect. In this way, the specific phase difference is generated between the o ray and the e ray split from the first polarized light. For ease of description, the phase difference generated between the o ray and the e ray split from the first polarized light is referred to as a phase difference generated for the first polarized light in this specification. The liquid crystal on silicon 5 can achieve an objective of modulating the polarization state of the first polarized light by controlling a phase difference to be generated for the first polarized light.

However, in some scenarios, there is a deviation between an actual phase difference and an ideal phase difference that are generated by the liquid crystal on silicon 5 for the first polarized light. The deviation is referred to as a phase-difference deviation in this specification. Existence of the phase-difference deviation affects a result of modulating the polarization state of the first polarized light. This affects display quality of the picture generation apparatus 1, and particularly, reduces the display contrast of the picture generation apparatus 1. For example, when a dark-state image requiring the minimum brightness needs to be displayed, because there is a deviation in the result that the liquid crystal on silicon 5 modulates the polarization state of the first polarized light, a specific amount of second polarized light may be generated. This causes a problem of light leakage in the dark-state image (a dark-field image is not black enough), which increases the minimum brightness that can be displayed, and reduces the display contrast. For another example, when a bright-state image requiring the maximum brightness needs to be displayed, because there is a deviation in the result that the liquid crystal on silicon 5 modulates the polarization state of the first polarized light, the first polarized light may not be completely converted into the second polarized light. This causes a problem that the bright-state image is not bright enough, which reduces the maximum brightness that can be displayed, and reduces the display contrast.

A temperature change of a temperature at which the liquid crystal layer 502 in the liquid crystal on silicon 5 is located is an important factor that causes the phase-difference deviation, and a magnitude of the temperature change further affects a magnitude of the phase-difference deviation. Main reasons for this phenomenon include the following several aspects.

In one aspect, a material characteristic of a liquid crystal material in the liquid crystal layer 502 is affected by the temperature, and the temperature change affects a correspondence between the optical axis direction and the birefringence of the liquid crystal layer 502. That is, when the optical axis directions of the liquid crystal layer 502 are the same, the birefringence changes as the temperature changes. Specifically, when the temperature rises, the liquid crystal layer 502 gradually changes to a liquid state, an order parameter of the liquid crystal layer 502 decreases, an anisotropy decreases, and the birefringence decreases when the optical axis directions are the same. When the temperature drops, the liquid crystal material gradually changes to a crystalline state, an order parameter of the liquid crystal material increases, an anisotropy increases, and the birefringence increases when the optical axis directions are the same. Because the birefringence changes with the temperature, the actual phase difference generated for the first polarized light also changes with the temperature, which causes the phase-difference deviation. In addition, a greater temperature change indicates a larger phase-difference deviation.

In another aspect, the temperature change affects the correspondence between the electric field and the optical axis direction of the liquid crystal layer 502. To be specific, when a same electric field is applied, the optical axis direction of the liquid crystal layer 502 varies with different temperatures. This causes the birefringence of the liquid crystal layer 502 to change with the temperature. Because the birefringence changes with the temperature, the actual phase difference generated for the first polarized light also changes with the temperature, which causes the phase-difference deviation. In addition, a greater temperature change indicates a larger phase-difference deviation.

In addition, due to factors such as a manufacturing process and a material characteristic, the liquid crystal molecules in the liquid crystal layer 502 may have an initial tilt angle. Consequently, in an initial state in which no electric field is applied, there is a specific deviation, from an optical axis direction in an ideal state, in an optical axis direction of the liquid crystal layer 502. This causes a deviation between the actual phase difference and the ideal phase difference that are generated for the first polarized light. The deviation is referred to as a residual phase difference in this specification. The residual phase difference is a part of the phase-difference deviation, and also changes with the temperature change. In addition, a greater temperature change indicates a larger residual phase difference.

It can be learned from this that the liquid crystal on silicon 5, affected by the temperature change, may cause the phase-difference deviation that varies with the temperature for the first polarized light. A greater temperature change indicates a larger phase-difference deviation. However, the phase-difference deviation that varies with the temperature affects the result of modulating the polarization state of the first polarized light, which affects display quality of the picture generation apparatus 1. In addition, a greater temperature change indicates more serious impact on the display quality.

Based on this, the phase compensation apparatus 4 is further disposed in the picture generation apparatus 1 provided in this embodiment of this application. The phase compensation apparatus 4 is configured to perform symmetric compensation on the phase-difference deviation that varies with the temperature, to resolve a problem that display quality of the picture generation apparatus 1 is affected by the temperature change. This helps improve display quality and broaden an applicable temperature of an image display apparatus.

As shown in FIG. 1 and FIG. 5, in this embodiment, the phase compensation apparatus 4 is disposed between the polarizing beam splitter 3 and the liquid crystal on silicon 5, and includes a phase compensation plate 41 and a drive apparatus 42. The phase compensation plate 41 includes at least two compensation portions with different phase delay amounts. The compensation portions with different phase delay amounts correspond to different compensation states of the phase compensation plate 41, and are configured to compensate for phase-difference deviations caused by the liquid crystal layer 502 at different temperatures. That is, there are correspondences between the compensation portions in the phase compensation plate 41 and actual temperatures at which the liquid crystal layer 502 is located. A quantity of compensation portions in the phase compensation plate 41 and a value of each respective phase delay amount may be determined based on the image display apparatus and an applicable temperature range.

The compensation portion may include a wave plate or an optical compensation film configured to generate a corresponding phase delay amount. The wave plate may be made of a birefringent crystal (such as quartz or mica), and the phase delay amount of the wave plate may be determined based on thickness of the wave plate. The wave plate may also be formed by stretching a polymer material, and the phase delay amount of the wave plate may be determined by controlling a stretching rate and the thickness of the wave plate. The optical compensation film may be a uniaxial compensation film or a biaxial (Biaxial-Plate) compensation film. The uniaxial compensation film may be an A-Plate (an optical axis is parallel to a film surface), a C-Plate (an optical axis is perpendicular to a film surface), or an O-Plate (there is an included angle between an optical axis and a film surface) compensation film. In terms of a manufacturing manner, the optical compensation film may be manufactured in a thin film stretching manner or a liquid crystal coating manner, and a manufacturing material may be an organic material or may be an inorganic material. A specific type and a parameter of an optical compensation layer may be determined based on an actual application scenario.

Different compensation portions in the phase compensation plate 41 may be different regions of a same plate-shaped structure, or may be different parts that are physically separated in a same plate-shaped structure. Different compensation portions in the phase compensation plate 41 may also be of independent structures, and the phase compensation plate 41 is a general term of a series of compensation portions.

The drive apparatus 42 is configured to drive the compensation portions to drive the phase compensation plate 41 to move. The movement manner may be rotation, translation, or the like. The phase compensation plate 41 may enable, under driving by the drive apparatus 42, any compensation portion to be in an optical path between the polarizing beam splitter 3 and the liquid crystal on silicon 5, to generate a corresponding phase delay amount for light passing through the compensation portion. In addition, the drive apparatus 42 may be used to switch between the compensation portions in the optical path between the polarizing beam splitter 3 and the liquid crystal on silicon 5. The movement manner in which the drive apparatus 42 drives the phase compensation plate 41 is related to an arrangement manner of the compensation portions in the phase compensation plate 41.

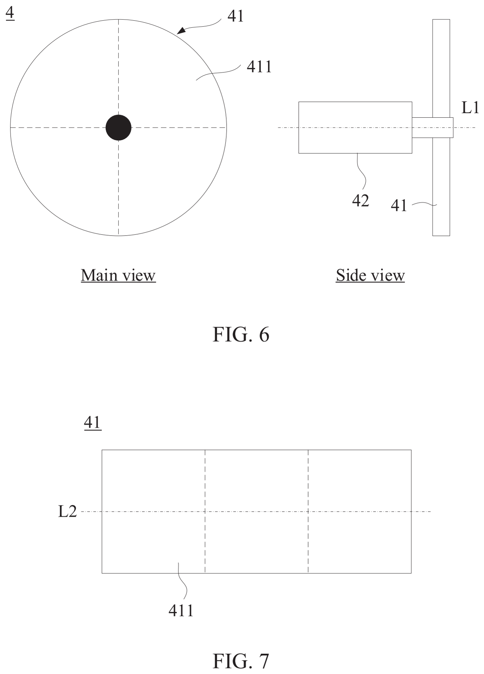

For example, as shown in FIG. 6, the phase compensation plate 41 may be of a circular plate-shaped structure that uses a first axis L1 as a central axis. The compensation portions 411 in the phase compensation plate 41 are arranged around the first axis L1, and the first axis L1 is parallel to a light propagation direction at a position at which the phase compensation plate 41 is located. The drive apparatus 42 is a rotation drive apparatus that can drive the phase compensation plate 41 to rotate around the first axis L1, and the rotation drive apparatus may use a motor or a piezoelectric device to provide power.

In a solution in which the drive apparatus 42 drives the phase compensation plate 41 to rotate around the first axis L1, the phase compensation plate 41 may alternatively be of a circular ring-shaped structure, a sector-shaped structure, a semicircle-shaped structure, or the like that uses the first axis L1 as the central axis. A specific shape of the phase compensation plate 41 may be determined based on factors such as disposition positions, sizes, and quantities of the compensation portions 411 in the phase compensation plate 41.

For another example, as shown in FIG. 7, the compensation portions 411 in the phase compensation plate 41 are arranged along a first straight line L2, and the first straight line L2 is perpendicular to a light propagation direction of a position at which the phase compensation plate 41 is located. The drive apparatus 42 is a linear drive apparatus that can drive the phase compensation plate 41 to move along the first straight line L2, and the linear drive apparatus may use a motor or a piezoelectric device to provide power.

When different compensation portions 411 in the phase compensation plate 41 are located in the optical path between the polarizing beam splitter 3 and the liquid crystal on silicon 5, the compensation portions 411 are in different compensation states. In different compensation states, the phase compensation plate 41 has different phase delay amounts for the optical path between the polarizing beam splitter 3 and the liquid crystal on silicon 5. It can be learned from the foregoing description that the phase compensation plate 41 has at least two compensation states under driving of the drive apparatus 42, there are correspondences between the compensation states and the compensation portions 411 located in the optical path between the polarizing beam splitter 3 and the liquid crystal on silicon 5, and there is a correspondence between a quantity of compensation states and a quantity of compensation portions 411 in the phase compensation plate 41. The drive apparatus 42 may further switch, by driving the phase compensation plate 41 to move, between the compensation portions 411 that are in the phase compensation plate 41 and that are in the optical path between the polarizing beam splitter 3 and the liquid crystal on silicon 5, to achieve an objective of changing the compensation state.

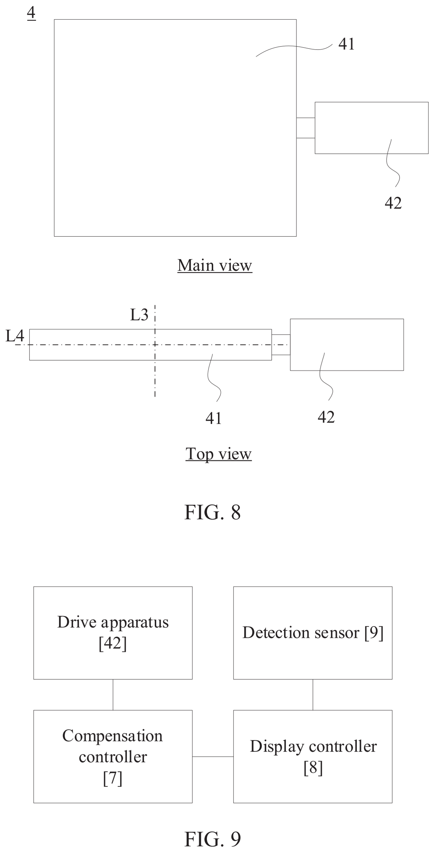

The phase compensation apparatus 4 in the foregoing embodiment changes the phase delay amount of the phase compensation plate 41 in the optical path by switching between different compensation portions 411, that is, changes the compensation state of the phase compensation plate 41. However, this embodiment of this application is not limited thereto. For example, in some embodiments, as shown in FIG. 8, the phase compensation plate 41 is of a plate-shaped structure whose thickness direction is parallel to a second straight line L3, and the drive apparatus 42 is a rotation drive apparatus 42 that drives the phase compensation plate 41 to rotate around a second axis L4. The second axis L4 is perpendicular to a light propagation direction of a position at which the phase compensation plate 41 is located, and is perpendicular to the second straight line L3, and the second axis L4 passes through the phase compensation plate 41. Therefore, in a process in which the drive apparatus 42 drives the phase compensation plate 41 to rotate around the second axis L4, a tilt angle of the phase compensation plate 41 relative to the light propagation direction may be adjusted. This can change a distance that light passes through the phase compensation plate 41, and can further change a value of the phase delay amount. It can be learned from this that in this solution, the phase compensation plate 41 may also have at least two compensation states under driving by the drive apparatus 42, in different compensation states, the phase compensation plate 41 has different phase delay amounts for the optical path between the polarizing beam splitter 3 and the liquid crystal on silicon 5, and the drive apparatus 42 plays a role in driving the phase compensation plate 41 to move to change the compensation state.

In this embodiment, the rotation drive apparatus may use a motor or a piezoelectric device to provide power.

The picture generation apparatus 1 provided in this embodiment of this application further includes a compensation controller. The compensation controller is electrically connected to the drive apparatus 42 and is configured to control, based on an external input signal and/or an automatic control signal, the drive apparatus 42 to move. The external input signal may be a control signal manually input by a user, and the automatic control signal may be a control signal automatically generated by using a built-in algorithm based on a working parameter of the liquid crystal on silicon 5.

In this embodiment, as shown in FIG. 9, the picture generation apparatus 1 further includes a display controller 8 and a detection sensor 9. The display controller 8 is configured to control the liquid crystal on silicon 5 to work. The detection sensor 9 is electrically connected to the display controller 8, and is configured to detect temperature information of the picture generation apparatus 1 and transmit detection information to the display controller 8. The detection sensor 9 herein may be deployed on the liquid crystal on silicon 5 to detect a temperature of the liquid crystal on silicon 5, or may be deployed at another position to detect an overall temperature of the picture generation apparatus 1.

The display controller 8 is electrically connected to a compensation controller 7, and is configured to transfer the temperature information obtained by the detection sensor 9 to the compensation controller 7. The compensation controller 7 is configured to control, based on temperature information of the detection sensor 9, the drive apparatus 42 to move. The compensation controller 7 may include a register that records a correspondence between the temperature information and a drive instruction. The drive instruction herein is instruction information used to control the drive apparatus 42 to enable the phase compensation plate 41 to move to be in a specified state.

The display controller 8 and the compensation controller 7 may be independent control apparatuses, and the compensation controller 7 may alternatively be integrated into the display controller 8.

In some embodiments, the detection sensor 9 may directly transmit the detection information to the compensation controller 7 in a wired or wireless manner.

In the foregoing embodiment, the phase-difference deviation caused due to impact of the temperature is used as an example to describe a relationship between the phase-difference deviation and the temperature, a principle that the phase-difference deviation affects display quality, and a principle that the phase compensation apparatus 4 is used for compensation. However, the factors that cause and affect the phase-difference deviation are not only the temperature, and may also be other environment factors, such as humidity. A person skilled in the art may adaptively adjust, based on the foregoing solution for compensating for the phase-difference deviation generated caused due to impact of the temperature, to a solution for compensating for the phase-difference deviation caused due to impact of another environment factor.

For example, the detection sensor 9 may be used to detect information about an environment in which the picture generation apparatus 1 is located. The environment information may be the humidity, or both the humidity and the temperature. Then, the phase compensation apparatus 4 is used to compensate for the phase-difference deviation caused due to a change of the environment factor.

It should be noted that the environment information due to which the liquid crystal on silicon 5 in the picture generation apparatus 1 causes the phase-difference deviation may further include another type of information. Examples are not described herein one by one. For different environment information, for a compensation principle and a compensation process, refer to the foregoing description. Details are not described herein again.

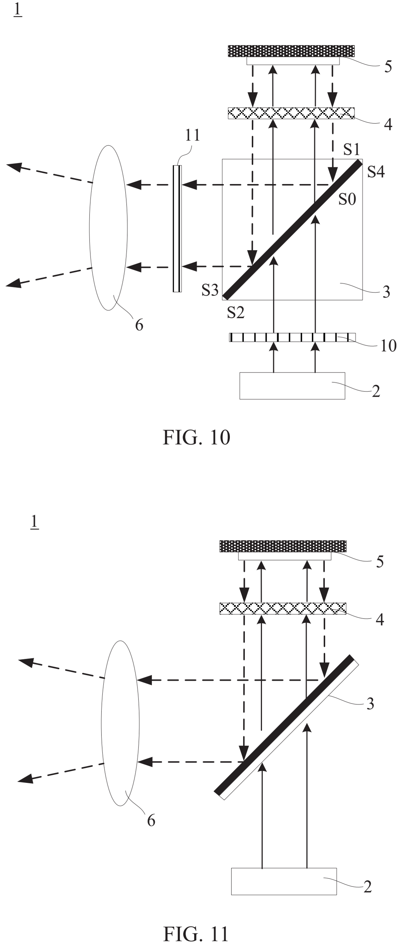

An embodiment of this application also provides another picture generation apparatus 1. As shown in FIG. 10, a difference between the picture generation apparatus 1 and the picture generation apparatus 1 in FIG. 1 lies in that the picture generation apparatus 1 shown in FIG. 10 further includes a first polarizing filter 10 and a second polarizing filter 11. The first polarizing filter 10 is disposed between the light source module 2 and the polarizing beam splitter 3, and the second polarizing filter 11 is disposed between the polarizing beam splitter 3 and the projection lens 6. A transmission axis direction of the first polarizing filter 10 is the same as the polarization direction of the first polarized light, and a transmission axis direction of the second polarizing filter 11 is the same as the polarization direction of the second polarized light. The first polarizing filter 10 and the second polarizing filter 11 may further improve the display contrast of the picture generation apparatus 1, and further improves display quality.

In some other embodiments, only either the first polarizing filter 10 or the second polarizing filter 11 may be disposed, which can also improve the display contrast.

In the foregoing embodiment, the light source module 2 can generate the first polarized light toward the polarizing beam splitter 3, and the first polarized light is projected to the liquid crystal on silicon 5 through the polarizing beam splitter 3. However, the picture generation apparatus 1 provided in this embodiment of this application is not limited thereto. For example, in some embodiments, the picture generation apparatus 1 may include an un-polarized light source. The un-polarized light source is configured to generate un-polarized light, namely, natural light, that is projected to the polarizing beam splitter 3. Because the polarizing beam splitter 3 has the function of polarizing, the polarizing beam splitter 3 may obtain the first polarized light from the un-polarized light, and project the first polarized light to the liquid crystal on silicon 5 through the first optical path. It can be learned from this that a combination of the un-polarized light source and the polarizing beam splitter 3 can also implement a function of projecting the first polarized light to the liquid crystal on silicon 5, that is, a function of the light source module 2. Therefore, the un-polarized light source and the polarizing beam splitter 3 may also be referred to as the light source module 2.

An embodiment of this application also provides another picture generation apparatus 1. As shown in FIG. 11, a difference between the picture generation apparatus 1 and the picture generation apparatus 1 in the foregoing embodiment lies in that the polarizing beam splitter 3 is a plate-type polarizing beam splitting device. The plate-type polarizing beam splitter 3 is manufactured by adopting a polarization beam splitting film that is of a metal wire gate microstructure attached to a glass substrate, or that may be of a metal wire gate microstructure directly formed on a glass substrate by using a process such as etching or nanoimprinting. The polarizing beam splitter 3 can also reflect the S-polarized light and transmit the P-polarized light, and has the reflection optical path and the transmission optical path, that is, has the first optical path and the second optical path. A working principle of using the plate-type polarizing beam splitting device as the polarizing beam splitter 3 is the same as a working principle of using a prism-type polarizing beam splitting device as the polarizing beam splitter 3. The working principle is not described herein again.

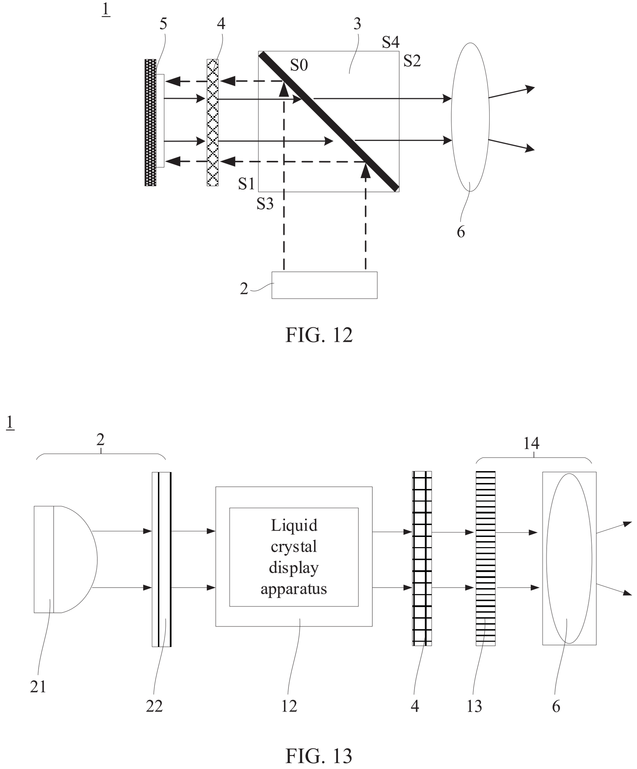

An embodiment of this application also provides another picture generation apparatus 1. As shown in FIG. 12, a difference between the picture generation apparatus 1 and the picture generation apparatus 1 in the foregoing embodiment lies in that the first polarized light is the S-polarized light, the second polarized light is the P-polarized light, the first optical path is the transmission optical path in the polarizing beam splitter 3, and the second optical path is the reflection optical path in the polarizing beam splitter 3. For a display principle of the picture generation apparatus 1, refer to the foregoing embodiment. Details are not described herein again.

An embodiment of this application also provides a picture generation apparatus 1 using a liquid crystal display apparatus. As shown in FIG. 13, the picture generation apparatus 1 includes the light source module 2, a liquid crystal display apparatus 12, a projection module 14, and the phase compensation apparatus 4. The light source module 2 is configured to generate the first polarized light projected to the liquid crystal display apparatus 12. The light source module 2 may be an integrated polarized light source, or may be of a combined module structure. In this embodiment, the light source module 2 includes an un-polarized light source 21 and a polarizer 22. The un-polarized light source 21 is configured to generate a light source beam irradiated on the polarizer 22, and the light source beam is natural light, that is, un-polarized light. The polarizer 22 is a polarizing filter that allows only linearly polarized light whose polarization direction is parallel to its transmission axis direction to pass through. When the light source beam passes through the polarizer 22, the first polarized light may be obtained from the light source beam, and the first polarized light obtained by using the polarizer 22 is irradiated on the liquid crystal display apparatus 12.

The liquid crystal display apparatus 12 is a transmissive display apparatus, and includes an array substrate and an aligned that are disposed opposite to each other, and a liquid crystal layer disposed between the array substrate and the aligned substrate. The liquid crystal display apparatus 12 includes a plurality of pixels arranged in an array. A plurality of pixel electrodes corresponding to the pixels are disposed on the array substrate, and a common electrode is disposed on the aligned substrate. An objective of modulating the polarization state of the first polarized light can be achieved by applying electric fields between the pixel electrodes and the common electrode.

The liquid crystal display apparatus 12 modulates the polarization state of the first polarized light to form a modulated beam. The modulated beam may be the first polarized light, the second polarized light, elliptically polarized light, or circularly polarized light. The modulated beam emitted from the liquid crystal display apparatus 12 is illuminated on the projection module 14, and the projection module 14 is configured to implement a function of projecting the second polarized light in the modulated beam. In this embodiment, the projection module 14 includes an analyzer 13 and the projection lens 6. The analyzer 13 is a polarizing filter whose transmission axis direction is the same as the polarization direction of the second polarized light, and therefore, allows only the second polarized light to pass through.

The second polarized light passing through the analyzer 13 is irradiated on the projection lens 6. The projection lens 6 may be a short-focus lens, or may be a long-focus lens, and is configured to project the second polarized light to a preset position, for example, a position of a diffusion screen or a reflection element, to implement a display function of the picture generation apparatus 1.

A principle of modulating the polarization state of the first polarized light by the liquid crystal display apparatus 12 is the same as that of modulating the polarization state of the first polarized light by the liquid crystal on silicon 5. Both of them control the birefringence of the liquid crystal layer through the electronically controlled birefringence effect, so that the specific phase difference is generated between the o ray and the e ray that are split from the first polarized light. Therefore, the picture generation apparatus 1 that uses the liquid crystal display apparatus 12 also has a problem that the phase-difference deviation affects display quality.

Based on this, the phase compensation apparatus 4 is also disposed in the picture generation apparatus 1. The phase compensation apparatus 4 may be disposed between the projection module 14 and the liquid crystal display apparatus 12, and/or between the light source module 2 and the liquid crystal display apparatus 12, that is, disposed between the light source module 2 and the projection module 14. In this embodiment, the phase compensation apparatus 4 is disposed between the liquid crystal display apparatus 12 and the analyzer 13.

For a structure and a working principle of the phase compensation apparatus 4, refer to the description about the phase compensation apparatus 4 in the foregoing embodiment. Details are not described herein again.

The picture generation apparatus 1 provided in this embodiment of this application may be applied to an audio and video entertainment scenario and an assisted driving scenario. During specific application, the picture generation apparatus 1 may be used independently, or may be integrated into another device as a component.

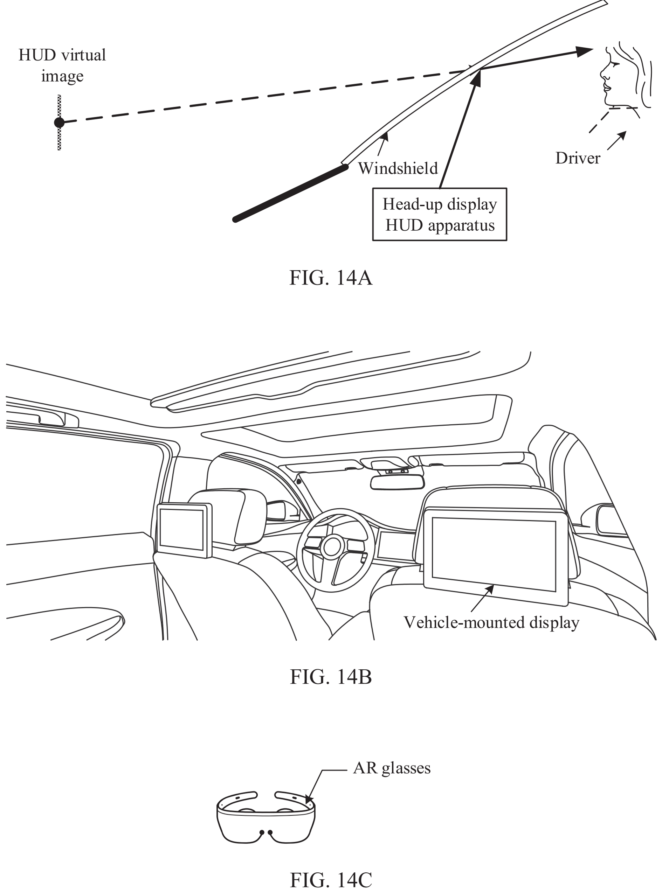

For example, in a possible application scenario, the picture generation apparatus in this embodiment of this application is integrated into a head-up display apparatus (head up display, HUD). Refer to FIG. 14A. FIG. 14A is described by using an example in which the head-up display apparatus is mounted in a transportation means. The head-up display apparatus may project navigation information, dashboard information, and the like into a driver's front field of view, to prevent the driver from looking down to view the information, which affects driving safety. After an image projected by the head-up display apparatus is reflected by a windshield, a virtual image is formed outside the transportation means. A type of the head-up display apparatus includes but is not limited to a windshield (Windshield, W)-HUD, augmented reality head-up display (AR-HUD), and the like.

In a possible implementation, the picture generation apparatus in this embodiment of this application is integrated into a vehicle-mounted display. Refer to FIG. 14B. The vehicle-mounted display may be mounted at a rear of a seat in the transportation means, a front passenger seat, or the like. A position at which the vehicle-mounted display is mounted is not limited in this application.

In another possible application scenario, the picture generation apparatus in this embodiment of this application is integrated into a near-eye display (Near-Eye Display, NED) device. The NED device may be, for example, an AR device or a VR device. The AR device may include but is not limited to AR glasses or an AR helmet, and the VR device may include but is not limited to VR glasses or a VR helmet. Refer to FIG. 14C. The AR glass device is used as an example. A user may wear the AR glasses to play a game, watch a video, participate in a virtual conference, perform video shopping, or the like.

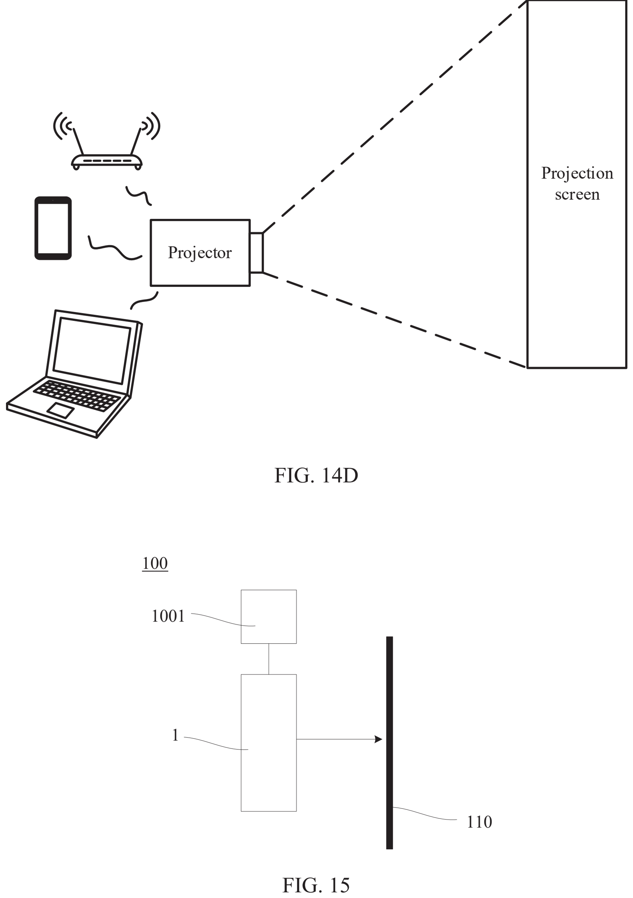

In still another possible application scenario, the picture generation apparatus in this embodiment of this application is integrated into a projector. Refer to FIG. 14D. The projector may project an image onto a wall or a projection screen.

The foregoing application scenarios are merely examples. The picture generation apparatus 1 provided in this application may be further used in another possible scenario, for example, a medical device. This is not limited in this application.

An embodiment of this application further provides a display device. As shown in FIG. 15, the display device 100 includes a processor 1001 and the picture generation apparatus 1 in the foregoing embodiments. The processor 1001 is configured to control the picture generation apparatus 1 to form imaging light.

The display device 100 provided in this embodiment of this application may be a head-up display apparatus, a vehicle-mounted display, a near-eye display device, a projector, a medical device, or the like mentioned in the foregoing application scenario, or may be a display integrated into a smart household appliance device, or may be a web television, a smart television, or an Internet Protocol television (IPTV), or may be integrated into a web television, a smart television, or an Internet Protocol television.

In some embodiments, the display device 100 further includes a diffusion screen 110. The diffusion screen 110 is disposed on a light-emitting side of the picture generation apparatus 1, and is configured to: receive the imaging light emitted by the picture generation apparatus 1 and perform imaging. In addition, the diffusion screen 110 may improve, based on scattering effect and a structure of the diffusion screen 110, uniformity of an image that is imaged. In this embodiment, the diffusion screen 110 may be a reflective diffusion screen or a transmissive diffusion screen.

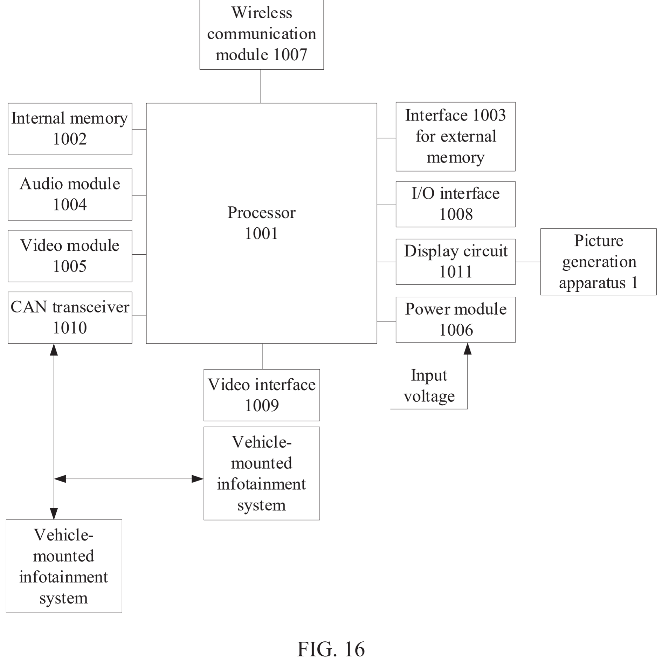

FIG. 16 is a diagram of the display device 100 according to an embodiment of this application.

As shown in FIG. 16, a circuit in the display device 100 mainly includes a processor 1001, an internal memory 1002, an interface 1003 for external memory, an audio module 1004, a video module 1005, a power module 1006, a wireless communication module 1007, an I/O interface 1008, a video interface 1009, a controller local area network (Controller Area Network, CAN) transceiver 1010, a display circuit 1011, and any one of the foregoing picture generation apparatuses 1. The processor 1001 may be connected to a peripheral component of the processor 1001 through a bus, for example, the internal memory 1002, the CAN transceiver 1010, the audio module 1004, the video module 1005, the power module 1006, the wireless communication module 1007, the I/O interface 1008, the video interface 1009, the transceiver 1010, and the display circuit 1011.

The processor 1001 may be referred to as a front-end processor. The processor 1001 includes one or more processing units. For example, the processor 1001 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, a neural-network processing unit (neural-network processing unit, NPU), and/or the like. Different processing units may be independent devices, or may be integrated into one or more processors.

A memory may be further disposed in the processor 1001, and is configured to store instructions and data. For example, the memory may be configured to store an operating system and an AR Creator software package of the display device 100. In some embodiments, the memory in the processor 1001 is a cache. The memory may store instructions or data just used or cyclically used by the processor 1001. If the processor 1001 needs to use the instructions or the data again, the processor 1001 may directly invoke the instructions or the data from the memory. This avoids repeated access, reduces waiting time of the processor 1001, and improves system efficiency.

In addition, if the display device 100 in this embodiment is mounted on a transportation means, functions of the processor 1001 may be implemented by a domain controller on the transportation means.

In some embodiments, the display device 100 may further include a plurality of input/output (input/output, I/O) interfaces 1008 connected to the processor 1001. The interface 1008 may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like. The I/O interface 1008 may be connected to a device such as a mouse, a touchscreen, a keyboard, a camera, a speaker/horn, a microphone, or the like, or may be connected to a physical button (for example, a volume button, a brightness adjustment button, a power-on/off button, or the like) on the display device 100.

The internal memory 1002 may be configured to store computer-executable program code, and the executable program code includes instructions. The memory 1002 may include a program storage area and a data storage area. The program storage area may store an operating system, an application required by at least one function (such as a call function, a time setting function, or an AR function), and the like. The data storage area may store data (such as a phone book and world time) created in a process of using the display apparatus, and the like. In addition, the internal memory 1002 may include a high-speed random access memory, or may include a non-volatile memory, for example, at least one magnetic disk storage device, a flash memory, or a universal flash storage (universal flash storage, UFS). The processor 1001 runs instructions stored in the internal memory 1002 and/or instructions stored in the memory disposed in the processor 1001, to perform various function applications of the display device 100 and data processing.

The interface 1003 for external memory may be configured to connect to an external memory (for example, a Micro SD card). The external memory may store data or program instructions as required. The processor 1001 may perform an operation such as reading or writing on the data or the program through the interface 1003 for external memory.

The audio module 1004 is configured to convert digital audio information into an analog audio signal for output, and is also configured to convert an analog audio input into a digital audio signal. The audio module 1004 may be further configured to encode and decode an audio signal, for example, perform voice playing or voice recording. In some embodiments, the audio module 1004 may be disposed in the processor 1001, or some functional modules in the audio module 1004 are disposed in the processor 1001. The display apparatus may implement an audio function through the audio module 1004, the application processor, and the like.

The video interface 1009 may receive externally input audio and video, and may be specifically a high-definition multimedia interface (high-definition multimedia interface, HDMI), a digital visual interface (digital visual interface, DVI), a video graphics array (video graphics array, VGA), a display port (display port, DP), a low-voltage differential signal (low-voltage differential signaling, LVDS) interface, and the like. The video interface 1009 may further output a video externally. For example, the display device 100 receives, through the video interface, video data sent by a navigation system or video data sent by a domain controller.

The video module 1005 may decode a video input by the video interface 1009, for example, perform H.264 decoding. The video module may further encode a video collected by the display device 100, for example, perform H.264 encoding on a video collected by an external camera. In addition, the processor 1001 may also decode the video input by the video interface 1009, and then output a decoded image signal to the display circuit 1011.

Further, if the display device 100 in this embodiment is mounted on a transportation means, the display device 100 further includes the CAN transceiver 1010, and the CAN transceiver 1010 may be connected to a CAN bus (CAN BUS) of a vehicle. Through the CAN bus, the display device 100 can communicate with a vehicle-mounted entertainment system (music, radio, and video modules), a vehicle status system, and the like. For example, a user may enable a vehicle-mounted music playing function by operating the display device 100. The vehicle status system may send vehicle status information (vehicle door, seat belt, and the like) to the display device 100 for display.

The display circuit 1011 and the picture generation apparatus 1 jointly implement a function of displaying an image. The display circuit 1011 receives an image signal output by the processor 1001, processes the image signal, and inputs a processed image signal into the picture generation apparatus 1 for imaging. The display circuit 1011 may further control the image displayed by the picture generation apparatus 1, for example, control a parameter such as display brightness or a display contrast. The display circuit 1011 may include a drive circuit, an image control circuit, and the like.

In this embodiment, the video interface 1009 may receive input video data (or referred to as a video source), the video module 1005 performs decoding and/or digitization processing on the video data, and outputs an image signal to the display circuit 1011. The display circuit 1011 drives, based on the input image signal, the picture generation apparatus 1 to perform imaging, to generate a visual image (emit imaging light).

The power module 1006 is configured to supply power to devices such as the processor 1001 and the picture generation apparatus 1 based on input power (for example, a direct current). The power module 1006 may include a rechargeable battery. In addition, the power module 1006 may be connected to a power supply module (for example, a power battery) of the vehicle, and the power supply module of the vehicle supplies power to the power module 1006 of the display device 100.

The wireless communication module 1007 may enable the display device 100 to perform wireless communication with the outside, and may provide a wireless communication solution such as a wireless local area network (wireless local area network, WLAN), a wireless fidelity (wireless fidelity, Wi-Fi) network, Bluetooth (Bluetooth, BT), a global navigation satellite system (global navigation satellite system, GNSS), frequency modulation (frequency modulation, FM), a near field communication (near field communication, NFC) technology, or an infrared (infrared, IR) technology. The wireless communication module 1007 may be one or more devices integrating at least one communication processing module. The wireless communication module 1007 receives an electromagnetic wave through an antenna, performs frequency modulation and filtering processing on an electromagnetic wave signal, and sends a processed signal to the processor 1001. The wireless communication module 1007 may further receive a to-be-sent signal from the processor 1001, perform frequency modulation and amplification on the signal, and convert the signal into an electromagnetic wave for radiation through the antenna.

In addition, in addition to inputting through the video interface 1009, the video data decoded by the video module 1005 may alternatively be received in a wireless manner through the wireless communication module 1007 or read from the internal memory 1002 or the external memory. For example, the display device 100 may receive the video data from the terminal device or the vehicle-mounted entertainment system through the wireless local area network in the vehicle, and the display device 100 may further read the audio and video data stored in the internal memory 1002 or the external memory.

In addition, the circuit diagram shown in embodiments of this application does not constitute a specific limitation on the display device 100. In some other embodiments of this application, the display device 100 may include more or fewer components than those shown in the figure, or a combination of some components, or splits from some components, or a different component layout. The components shown in the figure may be implemented by hardware, software, or a combination of software and hardware.

In addition to the foregoing functions, the display device 100 may further provide a function of television broadcasting and receiving. For example, the display device 100 may be integrated into the web television, the smart television, or the Internet Protocol television (IPTV).

An embodiment of this application also provides a transportation means, and the display device 100 in the foregoing embodiment is mounted on the transportation means. The transportation means further includes a reflection element. The reflection element is configured to reflect the imaging light formed by the display device 100 to a preset position.

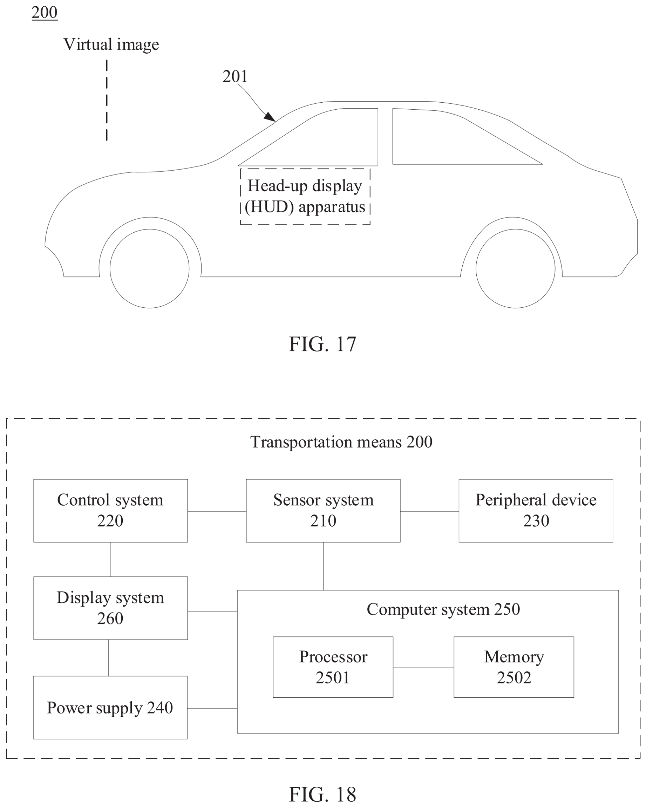

For example, as shown in FIG. 17, when the display device 100 is a head-up display apparatus mounted on the transportation means, the reflection element may be a windshield 201 of the transportation means. The windshield 201 is configured to receive imaging light emitted by the head-up display apparatus. The imaging light includes driving-related image information. The windshield 201 reflects the imaging light to eyes of a driver of the transportation means, so that the driver of the transportation means 200 sees a virtual image of the driving-related image information.

FIG. 18 is a diagram of a function of a transportation means 200 according to an embodiment of this application. The transportation means may include various subsystems, for example, a sensor system 210, a control system 220, one or more peripheral devices 230 (one peripheral device is used as an example in the figure), a power supply 240, a computer system 250, and a display system 260 in the figure. The subsystems may communicate with each other. The display system 260 may include the display device 100 provided in embodiments of this application. The transportation means may further include another function system, for example, an engine system that supplies power to the transportation means, and a cockpit. This is not limited herein in this application.

Specifically, the sensor system 210 may include several detection apparatuses. The detection apparatuses can sense measured information, and convert the sensed information into an electrical signal or other information in a required form based on a specific rule for output. The detection apparatuses may include a global positioning system (Global Positioning System, GPS), a vehicle speed sensor, an inertial measurement unit (Inertial Measurement Unit, IMU), a radar unit, a laser rangefinder, a camera apparatus, a wheel speed sensor, a steering sensor, a gear sensor, another element used for automatic detection, or the like. This is not limited in this application.

The control system 220 may include several elements, for example, a steering unit, a brake unit, a lighting system, an autonomous driving system, a map navigation system, a network time system, and an obstacle avoidance system shown in the figure. The control system 220 may receive information (for example, a vehicle speed and an inter-vehicle distance) sent by the sensor system 210, to implement functions such as autonomous driving and map navigation.

Optionally, the control system 220 may further include elements such as a throttle controller and an engine controller that are configured to control the traveling speed of the vehicle. This is not limited in this application.

The peripheral device 230 may include several elements, for example, a communication system, a touchscreen, a user interface, a microphone, and a speaker. The communication system is configured to implement network communication between the transportation means and a device other than the transportation means. During actual application, the communication system may implement network communication between the transportation means and another device by using a wireless communication technology or a wired communication technology. The wired communication technology may mean that the vehicle communicates with another device through a network cable, an optical fiber, or the like.

The power supply 240 represents a system used to provide power or energy for the vehicle, and may include but is not limited to a rechargeable lithium battery and a lead-acid battery. During actual application, one or more battery components in the power supply are configured to provide electrical energy or energy for starting the vehicle. A type and a material of the power supply are not limited in this application.

Several functions of the transportation means may be controlled and implemented by the computer system 250. The computer system 250 may include one or more processors 2501 (one processor is shown as an example in the figure) and a memory 2502 (which may also be referred to as a storage apparatus). During actual application, the memory 2502 is inside the computer system 250, or may be outside the computer system 250, for example, may be used as a cache in the transportation means. This is not limited in this application.

The processor 2501 may include one or more general-purpose processors, for example, a graphic processing unit (graphic processing unit, GPU). The processor 2501 may be configured to run a related program stored in the memory 2502 or instructions that correspond to a program and that are stored in the memory 2502, to implement a corresponding function of the vehicle. The processor 2501 may also be referred to as a domain controller.

The memory 2502 may include a volatile memory (volatile memory), for example, a RAM. The memory may alternatively include a non-volatile memory (non-volatile memory), for example, a ROM, a flash memory (flash memory), an HDD, or a solid-state drive SSD. The memory 2502 may alternatively include a combination of the foregoing types of memories. The memory 2502 may be configured to store a set of program code or instructions corresponding to program code, so that the processor 2501 invokes the program code or the instructions stored in the memory 2502 to implement a corresponding function of the vehicle. In this application, the memory 2502 may store a set of program code used for vehicle control. The processor 2501 may control safe driving of the vehicle by invoking the program code. A manner of implementing safe driving of the vehicle is specifically described in detail below in this application.

Optionally, in addition to storing the program code or the instructions, the memory 2502 may further store information such as a road map, a driving route, and sensor data. The computer system 250 may implement a vehicle-related function in combination with other elements in the diagram of the functional framework of the vehicle, such as the sensor and the GPS in the sensor system. For example, the computer system 250 may control the traveling direction or the traveling speed of the transportation means based on data input of the sensor system 210. This is not limited in this application.

The display system 260 may interact with another system in the transportation means. For example, the display system 260 may display navigation information sent by the control system 220, or play multimedia content sent by the computer system 250 and the peripheral device 230. For a specific structure of the display system 260, refer to the foregoing embodiment of the display apparatus. Details are not described herein again.

The four subsystems shown in this embodiment, namely, the sensor system 210, the control system 220, the computer system 250, and the display system 260 are merely examples, and do not constitute a limitation. During actual application, the transportation means may combine several elements in the vehicle based on different functions, to obtain subsystems with corresponding different functions. During actual application, the transportation means may include more or fewer subsystems or elements. This is not limited in this application.

The transportation means in this embodiment of this application may be a known transportation means like a vehicle, an airplane, a ship, or a rocket, or may be a new transportation means that is to emerge in the future. The vehicle may be an electric vehicle, a fuel vehicle, or a hybrid electric vehicle, for example, a pure electric vehicle, a range extended electric vehicle, a hybrid electric vehicle, a fuel cell vehicle, or a new energy vehicle. This is not specifically limited in this application.

Technical effects that can be achieved by the display device and the transportation means provided in embodiments of this application are the same as technical effects that can be achieved by the picture generation apparatus 1 in any one of the foregoing embodiments. Details are not described herein again.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A picture generation apparatus, wherein the picture generation apparatus comprises a light source module, a light modulator, a projection module, and a phase compensation apparatus;

> the light source module is configured to generate first polarized light projected to the light modulator;
> the light modulator is configured to modulate the first polarized light into a modulated beam;
> the projection module is configured to project second polarized light in the modulated beam, and the first polarized light and the second polarized light are linearly polarized light whose polarization directions are perpendicular to each other; and
the phase compensation apparatus is disposed between the light source module and the projection module, and comprises a phase compensation plate and a drive apparatus, the drive apparatus is configured to drive the phase compensation plate to move, the phase compensation plate has at least two compensation states under driving by the drive apparatus, and in different compensation states, phase delay amounts of the phase compensation plate in an optical path between the light source module and the projection module are different.

2. The picture generation apparatus according to claim 1, wherein the phase compensation plate comprises at least two compensation portions, and the drive apparatus drives the phase compensation plate to move, to enable any compensation portion to be located in the optical path between the light source module and the projection module.

3. The picture generation apparatus according to claim 2, wherein the compensation portions in the phase compensation plate are arranged around a first axis, and the drive apparatus is a rotation drive apparatus that drives the phase compensation plate to rotate around the first axis; and
the first axis is parallel to a light propagation direction of a position at which the phase compensation plate is located.

4. The picture generation apparatus according to claim 2, wherein the compensation portions in the phase compensation plate are arranged along a first straight line, and the drive apparatus is a linear drive apparatus that drives the phase compensation plate to move along the first straight line; and
the first straight line is perpendicular to a light propagation direction of a position at which the phase compensation plate is located.

5. The picture generation apparatus according to claim 1, wherein the phase compensation plate is of a plate-shaped structure whose thickness direction is parallel to a second straight line, and the drive apparatus is a rotation drive apparatus that drives the phase compensation plate to rotate around a second axis; and
the second axis is perpendicular to a light propagation direction of a position at which the phase compensation plate is located, and is perpendicular to the second straight line, and the second axis passes through the phase compensation plate.

6. The picture generation apparatus according to any one of claims 1 to 5, wherein the drive apparatus comprises a drive motor or a piezoelectric device.

7. The picture generation apparatus according to any one of claims 1 to 6, wherein the picture generation apparatus further comprises a compensation controller, and the compensation controller is electrically connected to the drive apparatus, and is configured to control, based on an external input signal and/or an automatic control signal, the drive apparatus to move.

8. The picture generation apparatus according to claim 7, wherein the picture generation apparatus further comprises a detection sensor, the detection sensor is configured to detect environment information of the picture generation apparatus, and the compensation controller is configured to control, based on the environment information, the drive apparatus to move.

9. The picture generation apparatus according to claim 8, wherein the environment information of the picture generation apparatus comprises at least one of the following: a temperature or humidity.

10. The picture generation apparatus according to any one of claims 1 to 9, wherein the light modulator is a liquid crystal on silicon, and the projection module comprises a polarizing beam splitter and a projection lens;

    the polarizing beam splitter comprises a first optical path and a second optical path that are formed through polarizing beam splitting, the first optical path is configured to transmit the first polarized light, and the second optical path is configured to transmit the second polarized light;
    the light source module and the liquid crystal on silicon are respectively disposed opposite to two ends of the first optical path;
    the projection lens and the liquid crystal on silicon are respectively disposed opposite to two ends of the second optical path, and the polarizing beam splitter is configured to: obtain the second polarized light from a modulated beam emitted by the liquid crystal on silicon, and project the second polarized light to the projection lens through the second optical path; and
    the phase compensation apparatus is disposed between the polarizing beam splitter and the liquid crystal on silicon.

11. The picture generation apparatus according to claim 10, wherein

the light source module comprises a polarized light source, and the polarized light source is configured to generate the first polarized light projected to the polarizing beam splitter; or
the light source module comprises an un-polarized light source and a polarizer, the un-polarized light source is configured to generate a light source beam projected to the polarizer, the light source beam is un-polarized light, and the polarizer is configured to: obtain the first polarized light from the light source beam, and project the first polarized light to the polarizing beam splitter.

12. The picture generation apparatus according to claim 10 or 11, wherein the picture generation apparatus further comprises a first polarizing filter disposed between the light source module and the polarizing beam splitter, and/or a second polarizing filter disposed between the polarizing beam splitter and the projection module; and
a transmission axis direction of the first polarizing filter is the same as the polarization direction of the first polarized light, and a transmission axis direction of the second polarizing filter is the same as the polarization direction of the second polarized light.

13. The picture generation apparatus according to any one of claims 1 to 9, wherein the light modulator is a liquid crystal on silicon, the light source module comprises a polarizing beam splitter and an un-polarized light source, and the projection module comprises the polarizing beam splitter and a projection lens;

    the polarizing beam splitter comprises a first optical path and a second optical path that are formed through polarizing beam splitting, the first optical path is configured to transmit the first polarized light, and the second optical path is configured to transmit the second polarized light;
    the un-polarized light source and the liquid crystal on silicon are respectively disposed opposite to two ends of the first optical path, the un-polarized light source is configured to generate a light source beam projected to the polarizing beam splitter, the light source beam is un-polarized light, and the polarizing beam splitter is configured to: obtain the first polarized light from a light source beam emitted by the liquid crystal on silicon, and project the first polarized light to the liquid crystal on silicon through the first optical path;
    the projection lens and the liquid crystal on silicon are respectively disposed opposite to two ends of the second optical path, and the polarizing beam splitter is configured to: obtain the second polarized light from a modulated beam emitted by the liquid crystal on silicon, and project the second polarized light to the projection lens through the second optical path; and

the phase compensation apparatus is disposed between the polarizing beam splitter and the liquid crystal on silicon.

14. The picture generation apparatus according to any one of claims 10 to 13, wherein the polarizing beam splitter is a plate-type or prism-type polarizing beam splitting device.

15. The picture generation apparatus according to any one of claims 1 to 9, wherein the light modulator is a liquid crystal display apparatus, the light source module and the projection module are respectively disposed on two sides of the liquid crystal display apparatus, the projection module comprises an analyzer and a projection lens, and the analyzer is configured to: obtain the second polarized light from a modulated beam emitted by the liquid crystal display apparatus, and project the second polarized light to the projection lens; and

the phase compensation apparatus is disposed between the light source module and the liquid crystal display apparatus, and/or between the projection module and the liquid crystal display apparatus.

16. The picture generation apparatus according to claim 15, wherein the light source module comprises a polarized light source, and the polarized light source is configured to generate the first polarized light projected to the polarizing beam splitter; or

the light source module comprises an un-polarized light source and a polarizer, the un-polarized light source is configured to generate a light source beam projected to the polarizer, the light source beam is un-polarized light, and the polarizer is configured to: obtain the first polarized light from the light source beam, and project the first polarized light to the liquid crystal display apparatus.

17. A display device, comprising a processor and the picture generation apparatus according to any one of claims 1 to 16, wherein the processor is configured to control the picture generation apparatus to form imaging light.

18. A transportation means, comprising the display device according to claim 17, wherein the display device is mounted in the transportation means.

19. The transportation means according to claim 18, wherein the transportation means further comprises a reflection element, the display device is configured to project imaging light to the reflection element, and the reflection element is configured to reflect the imaging light.

FIG. 1

FIG. 2

5

FIG. 3

5

FIG. 4

4

FIG. 5

4

41

411

L1

Main view

42      41

Side view

FIG. 6

41

L2

411

FIG. 7

4

41

42

Main view

L3

L4

41

42

Top view

FIG. 8

| Drive apparatus [42] | Detection sensor [9] |
|---|---|
| Compensation controller [7] | Display controller [8] |

FIG. 9

FIG. 10

FIG. 11

FIG. 12

FIG. 13

HUD virtual
image

Windshield

Driver

Head-up display
HUD apparatus

FIG. 14A

Vehicle-mounted display

FIG. 14B

AR glasses

FIG. 14C

FIG. 14D

100

1001

1

110

FIG. 15

FIG. 16

200

Virtual image

201

Head-up display
(HUD) apparatus

FIG. 17

Transportation means 200

| Control system 220 | Sensor system 210 | Peripheral device 230 |

Display system 260

Computer system 250

| Processor 2501 | Memory 2502 |

Power supply 240

FIG. 18

## INTERNATIONAL SEARCH REPORT

International application No.

**PCT/CN2025/072037**

| A. | CLASSIFICATION OF SUBJECT MATTER |
|---|---|

G02B27/28(2006.01)i

According to International Patent Classification (IPC) or to both national classification and IPC

| B. | FIELDS SEARCHED |
|---|---|

Minimum documentation searched (classification system followed by classification symbols)

IPC: G02B

Documentation searched other than minimum documentation to the extent that such documents are included in the fields searched

Electronic data base consulted during the international search (name of data base and, where practicable, search terms used)

CNTXT, WPABSC, ENTXTC, WPABS, ENTXT, CJFD: 深圳引望智能技术有限公司, 赵飞, 图像生成, 光机, 抬头显示, 近眼显示, 投影, 投射, 偏振分束, 偏振分光, 液晶显示, 硅基液晶, 光调制器, 双折射, 相位 3d 补偿, 片, 板, 驱动, 转, 改变, 调整, 调节, 温度, PGU, HUD, NED, project+, PBS, LCD?, LCoS, ECB, phase 3d compensat+, plate?, driv+, rotat+, adjust+, temperature

| C. | DOCUMENTS CONSIDERED TO BE RELEVANT |
|---|---|

| Category* | Citation of document, with indication, where appropriate, of the relevant passages | Relevant to claim No. |
|---|---|---|
| A | CN 216013929 U (BEIJING ASU TECHNOLOGY CO., LTD.) 11 March 2022 (2022-03-11) description, paragraphs [0021]-[0028], and figure 1 | 1-19 |
| A | CN 110312113 A (BEIJING ASU TECHNOLOGY CO., LTD.) 08 October 2019 (2019-10-08) entire document | 1-19 |
| A | CN 115598846 A (HUAWEI TECHNOLOGIES CO., LTD.) 13 January 2023 (2023-01-13) entire document | 1-19 |
| A | CN 1464990 A (3M INNOVATIVE PROPERTIES COMPANY) 31 December 2003 (2003-12-31) entire document | 1-19 |
| A | CN 1540392 A (TSINGHUA UNIVERSITY) 27 October 2004 (2004-10-27) entire document | 1-19 |
| A | JP 2006163070 A (SONY CORP.) 22 June 2006 (2006-06-22) entire document | 1-19 |

☑ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **18 March 2025** | **21 March 2025** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
| --- |
| **PCT/CN2025/072037** |

**C.    DOCUMENTS CONSIDERED TO BE RELEVANT**

| Category* | Citation of document, with indication, where appropriate, of the relevant passages | Relevant to claim No. |
| --- | --- | --- |
| A | JP 2007212997 A (VICTOR COMPANY OF JAPAN) 23 August 2007 (2007-08-23)<br>entire document | 1-19 |

Form PCT/ISA/210 (second sheet) (July 2022)

**INTERNATIONAL SEARCH REPORT**
Information on patent family members

| International application No. |
|---|
| **PCT/CN2025/072037** |

| Patent document cited in search report | | | Publication date (day/month/year) | Patent family member(s) | | | Publication date (day/month/year) |
|---|---|---|---|---|---|---|---|
| CN | 216013929 | U | 11 March 2022 | None | | | |
| CN | 110312113 | A | 08 October 2019 | US | 2024085774 | A1 | 14 March 2024 |
| | | | | EP | 3981144 | A1 | 13 April 2022 |
| | | | | WO | 2020244621 | A1 | 10 December 2020 |
| | | | | US | 2022236633 | A1 | 28 July 2022 |
| | | | | US | 11860526 | B2 | 02 January 2024 |
| | | | | CN | 110312113 | B | 24 September 2021 |
| | | | | CN | 114391251 | A | 22 April 2022 |
| | | | | CN | 114391251 | B | 19 May 2023 |
| CN | 115598846 | A | 13 January 2023 | CN | 115598846 | B | 20 April 2024 |
| | | | | WO | 2024007749 | A1 | 11 January 2024 |
| CN | 1464990 | A | 31 December 2003 | KR | 20030064371 | A | 31 July 2003 |
| | | | | WO | 02095487 | A1 | 28 November 2002 |
| | | | | JP | 2004520628 | A | 08 July 2004 |
| | | | | US | 2003058408 | A1 | 27 March 2003 |
| | | | | US | 6764181 | B2 | 20 July 2004 |
| | | | | EP | 1390805 | A1 | 25 February 2004 |
| | | | | CN | 1232866 | C | 21 December 2005 |
| | | | | TW | 254158 | B1 | 01 May 2006 |
| CN | 1540392 | A | 27 October 2004 | CN | 1258691 | C | 07 June 2006 |
| JP | 2006163070 | A | 22 June 2006 | JP | 4639785 | B2 | 23 February 2011 |
| JP | 2007212997 | A | 23 August 2007 | JP | 4798366 | B2 | 19 October 2011 |

Form PCT/ISA/210 (patent family annex) (July 2022)

**REFERENCES CITED IN THE DESCRIPTION**

**Patent documents cited in the description**

- CN 202410142610